# EUROPÄISCHE PATENTSCHRIFT

(11) **EP 0 413 782 B1**
(45) Veröffentlichungstag und Bekanntmachung des Hinweises auf die Patenterteilung: **06.07.1994**
(21) Anmeldenummer: 90901755.0
(22) Anmeldetag: 29.01.1990
(51) Int. Cl.: B65G 19/22, B65G 19/10, B65G 23/06

(54) **WENDEZAHNGLIEDERBAND**
CONVEYOR WITH REVERSIBLE TEETH
BANDE TRANSPORTEUSE A DENTS REVERSIBLES

(30) Priorität: 24.02.1989 DE 3905754
(43) Veröffentlichungstag der Anmeldung: 27.02.1991
(73) Patentinhaber: HT MASCHINENVERTRIEB GMBH, D-46238 Bottrop (DE)
(72) Erfinder: TEKATHEN, Johann, D-4220 Dinslaken (DE); KROHM, Reinold, D-4690 Herne 1 (DE)
(74) Vertreter: Schulte, Jörg, Dipl.-Ing.
(86) Internationale Anmeldenummer: DE9000053
(87) Internationale Veröffentlichungsnummer: WO9009941

(56) Entgegenhaltungen:
- DE-A- 2 211 922
- DE-A- 2 841 619
- DE-A- 2 907 708
- DE-A- 3 235 471
- DE-A- 3 246 490
- DE-A- 3 320 220
- DE-A- 3 510 657
- DE-A- 3 514 103

## Beschreibung

Die Erfindung betrifft einen Kettenförderer mit Kettenband, insbesondere dem Massenguttransport im untertägigen Berg- und Tunnelbau dienendes Doppelmittenkettenband gemäß den Oberbegriff des Anspruchs 1.

Derartige Kettenbänder mit ineinandergreifenden Kettengliedern werden im untertägigen Berg- und Tunnelbau insbesondere zum Transport der hereingewonnenen Kohle und der Berge eingesetzt. Entsprechende Kettenbänder sind aber auch im übertägigen Bereich im Einsatz. Die Kettenbänder werden dabei durch Förderrinnen gezogen, die dadurch einem besonders hohen Verschleiß ausgesetzt sind. In den letzten Jahren hat man bei der Entwicklung von Fördererketten ausschließlich die Abmessungen immer größer gewählt, um den immer größer werdenden Leistungsanforde - rungen zu genügen. Diese Entwicklung ist allerdings unbefriedigend, weil dadurch letztlich der Verschleiß nicht vermindert werden kann, insbesondere aber bei den bisher im Einsatz befindlichen Rundgliederketten nur eine ungünstige Krafteinleitung von Kettenrädern in die Kettenbänder möglich ist. Außerdem ist durch die Form der Förderrinnen eine Dimensionsgrenze für die Kettenbänder gegeben.

Die Krafteinleitung erfolgt bei den bekannten Kettenförderern über die Kettenräder, die endseitig der Förderrinne angeordnet und mit den Antrieben oder mit einem Antrieb verbunden sind. Die Berührung zwischen Kettenstern bzw. Kettenrad und Rundgliederkette erfolgt bei den heute üblichen Kettenbändern nur punktuell, was sehr hohe Flächenpressungen in diesen punktuellen Berührungsbereichen mit sich bringt. Länger im Einsatz befindliche Kettenbänder haben daher in den Berührungsbereichen, d.h. im Abrollbereich deutliche Einkerbungen und zeigen einen sogenannten Entenbürzelverschleiß auf, der von den hohen Flächenpressungen herrührt. Diese ungünstige und unbefriedigende Krafteinleitung stellt den wesentlichen Schwachpunkt der heute fast ausschließlich im Einsatz befindlichen Rundgliederketten dar und begrenzt ihre Lebensdauer erheblich. Ein Kettenförderer dieser eingangs erwähnten Bauart ist aus der DE-A-32 35 471 bekannt.

Eine verbesserte Krafteinleitung soll durch eine aus der DE-C 694 515 bekannte Kettengliedform erreicht werden, bei der die Kettenglieder an beiden Enden rechtwinklig ausgebildet sind. Nachteilig ist hierbei aber wie bisher, daß der Verschleiß an den Kettengliedern, und zwar auch am rechtwinklig ausgebildeten Ende, so schnell auftritt, daß für den dann noch tragenden Querschnitt eine insgesamt nur geringfügig verlängerte Standdauer zu erreichen ist. Die entsprechend kantigen Kettenglieder sind darüber hinaus eine Gefährdung für die Tröge der Förderrinnen und letztlich auch für den Bereich der Kettenräder. Sie sind außerdem nur mit erheblichem Aufwand herzustellen. Ähnliche Kettenglieder sind auch aus der DE-B 22 47 300 bekannt, bei denen die Endbereiche jeweils kantig ausgebildet sind, um so eine bessere Kraftübertragung zu ermöglichen. Auch hier stellen die entsprechend kantigen Ausbildungen keine für den Gesamtförderer vorteilhafte Form dar, zumal diese Ausbildung extremem Verschleiß unterliegt.

In jüngerer Zeit werden sogenannte Geschirrkettenbänder eingesetzt, die den bisher nachteiligen punktuellen Kraftangriff an den Kettengliedern vermeiden sollen. Dafür wird ein hoher Materialaufwand in Kauf genommen und als weiterer wesentlicher Nachteil, völlig geänderte Kettenräder, die aufgrund des großen Teilungsabstandes von 770 mm erforderlich sind. So sind üblicherweise nur dreizähnige Triebstockräder bzw. Kettenräder im Einsatz, wobei sich aufgrund des großen notwendigen Taschenspiels ein unruhiger Lauf, Stöße und Schlageffekte mit hohen Spannungsspitzen ergeben.

Änlich ungünstig sind die Sonderbauarten nach der DE-A-32 35 471.1, Fig. 8 bis 14. Hier wird mit einem Seil und angepaßte Nocken aufweisenden Mitnehmern gearbeitet. Die Mitnehmer sind einseitig gebogen ausgebildet und können nur in einer Förderrichtung betrieben werden. Bei einem weiteren Kettenband ist zur besseren Krafteinleitung, vor allem aber zur Verbesserung des Einsatzes im Rollkurvenbetrieb ein Kettenband vorgesehen, bei dem die vertikalen Kettenglieder mit quer- und rechtwinklig zur Zugrichtung beidseitig überstehenden, angeschmiedeten Treibzapfen ausgerüstet sind (DE-A-35 10 657). An diese Treibzapfen können außen bei Bedarf Schleißkappen aufgesetzt werden, die der Form der Führung der Förderrinne angepaßt sind, so daß sich damit günstig geformte Mitnehmer ergeben. Abgesehen von der etwas aufwendigen Verbindung der Schleißkappen mit den eigentlichen Mitnehmern, d.h. also den Treibzapfen, ist von Nachteil, daß bei verbesserter Krafteinleitung Sonderkonstruktionen benötigt werden, die zwar mit entsprechendem Aufwand auch als Doppelkettenband Verwendung finden können, aber dann nur einen ungenügenden Transporteffekt erzielen, weil die Mitnehmer nur punktuell auf der Lauffläche der Förderrinnen aufliegen.

Der Erfindung liegt die Aufgabe zugrunde, einen Kettenförderer mit einem vielseitig einsetzbaren Kettenband zu schaffen, insbesondere für den untertägigen Einsatz mit wesentlich verbesserter Kraftübertragung zwischen Kettenband und Kettenrad und günstigen Transporteigenschaften.

Die Aufgabe wird erfindungsgemäß dadurch gelöst, daß der die horizontalen Kettenglieder der nebeneinanderliegenden Kettenstränge verbindende Bügel einen im Querschnitt die Form einer in horizontaler und vertikaler Richtung symmetrischen, im Bereich beider Scheitel eine Gleitfläche ergebend abgeschnittenen Ellipse aufweist und wobei der Bügel oder Teile des Bügels mit dem jeweiligen horizontalen Kettenglied eine einstückige Baueinheit bildet oder bilden und daß die im Bereich der Scheitel vorhandenen Gleitflächen zur Auflage auf der Lauffläche der Förderrinne ausgebildet sind.

Damit ergibt sich ein Kettenförderer mit Kettenband, vor allem Doppelkettenband, das vor- und rückverfahrbar ist, und das ohne großen Aufwand beispielsweise bei entsprechendem Verschleiß gewendet werden kann, um dann praktisch für die gleiche Standzeit noch einmal zur Verfügung zu stehen. Aufgrund der besonderen Wendezahnform ist aber nicht nur ein günstiger Transporteffekt und eine Mehrfachverwendung möglich, sondern vor allem auch eine optimale Krafteinleitung von den Kettenrädern in das Kettenband gewährleistet. Aufgrund der elliptischen Ausbildung der einzelnen Bügel ergibt sich nämlich ein Zahnkettenband, das eine flächige Krafteinleitung sichert. Aufgrund dieser Tatsache ist die Belastung der einzelnen Bügel wesentlich verringert, so daß sich wiederum deutlich erhöhte Standzeiten ergeben. Die einzelnen Kettenstränge können mit Hilfe der erfindungsgemäßen Bügel einfach und zweckmäßig miteinander verbunden werden.

Neben der günstigen Krafteinleitung aufgrund der entsprechenden Zahnflanken des Bügels bzw. der Kettenräder ergibt sich eine vorteilhafte Gleitfläche für jeden einzelnen Bügel auf der Laufbahn der Förderrinne, so daß bei günstigen Verschleißgegebenheiten dennoch ein günstiger Transport des Fördergutes gewährleistet ist. Durch das dichte Aneinanderordnen der einzelnen Bügel werden im übrigen die gröberen Kohle- und sonstigen Transportgutstücke quasi vom Kettenband getragen, ohne daß diese selbst auf der Lauffläche der Förderrinne Verschleiß verursachen können. Andererseits rutscht die feinkörnige Kohle bis auf die Lauffläche der Förderrinne durch und führt hier zu einem günstigen Schmiereffekt, der weiter zu einer Reduzierung des Verschleisses beiträgt.

Nach der zweckmäßigen Ausbildung der Erfindung ist vorgesehen, daß der Bügel oder die Teile des Bügels und die horizontalen Kettenglieder beider Kettenstränge eine einstückige Baueinheit bilden. Dadurch ergibt sich eine Stabilisierung des Kettenbandes, so daß sich im Bereich der Kettenräder ein gleichmäßiges Einleiten des Kettenbandes und gleichzeitig eine einwandfreie Kraftübertragung im Bereich der Zähne des Kettenrades ergibt.

Zur Erhöhung der Stabilität aber auch um eine möglichst preisgünstige Ausführungsform für das Kettenband vorzugeben, ist vorgesehen, daß der Bügel und die zugehörigen horizontalen Kettenglieder als Baueinheit im Gesenk geschlagen sind. Vorteilhaft ist dabei, daß der gesamte Bügel mit den angeformten Kettengliedern in einem Arbeitsgang im Gesenk geschlagen werden, so daß Nachbearbeitungsarbeiten praktisch ganz entfallen, insbesondere Schweiß- u.ä. Arbeiten, die sehr kostenaufwendig sind.

Eine gleichmäßige Belastung beider Kettenstränge, die nebeneinander hergeführt und miteinander durch die Bügel verbunden sind, wird durch eine Ausbildung der Erfindung sichergestellt, bei der die Bügelteile der benachbarten Kettenstränge über eine in beide Bügelteile einsteckbaren Schwerspannhülse und eine durchgehend ausgebildete Schraubstange miteinander verbunden sind. Durch diese Ausführung ist sichergestellt, daß auch bei nicht plan parallelem Einführen bzw. Eingreifen der beiden Kettenstränge bzw. der ihm zugeordneten Bügelteile, dennoch eine gleichförmige Einleitung der Kräfte vom Kettenrad in die Kettenstränge gesichert ist, weil die Verbindung der beiden Bügelteile bzw. der beiden Kettenstränge über die Schwerspannhülse einen gewissen Ausgleich zuläßt.

Zweckmäßigerweise ist gemäß der Erfindung die Gleitfläche konkav ausgebildet, so daß sich Reinigungskanten ergeben, die dafür Sorge tragen, daß auch bei feuchtem Fördergut ein immer gleichmäßiger Abtransport gewährleistet und Anbackungen sicher verhindert sind.

Die Kettenstränge sind bei der erfindungsgemäßen Lösung vorzugsweise so dicht nebeneinander angeordnet, daß sich quasi ein Kettenband ergibt. Dabei ist erfindungsgemäß vorgesehen, daß die horizontalen Kettenglieder in Längsrichtung genau mittig über den Bügel beidseitig vorstehend ausgebildet sind. So ist ein gleichmäßiger Abstand der Bügel gewährleistet und darüber hinaus das Einfügen der vertikalen Kettenglieder optimal gesichert. Aufgrund dieser Form können derartige Kettenbänder auch für Rollkurvenbetriebe eingesetzt werden, insbesondere dann, wenn, wie erwähnt, die beiden horizontalen Kettenglieder dicht nebeneinander mittig der Bügel angeschlagen bzw. angeordnet sind.

Zur Reduzierung des Gewichtes eines derartigen Kettenbandes sieht die Erfindung vor, daß nur jeweils einige Bügel in der Führung der Förderrinne verlaufen. Die übrigen dagegen sind kürzer ausgebildet und haben damit ein geringeres Gewicht und führen damit auch zu einer Gewichtsreduzierung des gesamten Kettenbandes. Um jeweils die Führung an beliebiger Stelle des Kettenbandes vornehmen zu können, sieht die Erfindung vor, daß die Bügel endseitig in Förderrichtung verlaufende Bohrungen aufweisen, die mit Verbindungsbohrungen von in die Führungen der Förderrinne eingepaßte Führungskappen korrespondierend ausgebildet sind. Aufgrund des Verlaufes der Bohrungen und der Verbindungsbohrungen können die Verbindungsschrauben waagerechtliegend eingebracht werden, wobei sie praktisch überhaupt keinem Verschleiß unterliegen und damit nicht nur montagefreundlich, sondern vor allen Dingen auch verschleißgünstig sind.

Die Montage der Führungskappen im nachhinein wird begünstigt und dadurch erleichtert, daß die Führungskappen eine mit der Form der Bügel korrespondierend Ausnehmung mit aufweisen. Die Führungskappen werden somit von den Seiten her auf die entsprechenden Bügel aufgeschoben und dann durch die Verbindungsschraube arretiert.

Der vorn bereits beschriebene Verschleiß an den Kettengliedern (Entenbürzelverschleiß) kann weitgehend verhindert werden, wenn, wie erfindungsgemäß vorgeschlagen, die vertikalen und horizontalen Kettenglieder im Abrollbereich kalottenförmig und damit eine flächige Anlage ergebend ausgebildet sind. Durch diese besondere Formgebung wird erreicht, daß im Abbaubereich die Kettenglieder flächig ineinandergreifen, so daß sich insgesamt volltragende Gelenke ergeben, die einen wesentlich größeren Einsatzbereich für derartige Kettenförderer mit Kettenbändern zulassen. So ist es möglich, derartige Kettenförderer mit Kettenbändern mit Kopfantrieb zu fahren bzw. auszurüsten, Kettenspanner einzusetzen sowie auch bei großen Baulängen Zwischenantriebe vorzusehen.

Die vertikalen Kettenglieder dagegen werden vom Verschleiß zielgerecht freigehalten, indem nach einer weiteren Ausbildung der Erfindung die die Gleitfläche erzeugende Schnittlinie bei den elliptischen Bügeln so gelegt ist, daß die Bügel die vertikalen Kettenglieder beidseitig quer zur Förderrichtung verlaufend überragen. Damit wird das gesamte Kettenband praktisch ausschließlich von den Bügeln getragen, während die Kettenglieder nicht mit der Förderrinne in Verbindung kommen. Dadurch kann vorteilhaft der gesamte Verschleiß auf die Bügel konzentriert werden, die aufgrund der erfindungsgemäßen Ausbildung wendbar sind und damit eine wesentlich erhöhte Standzeit erreichen.

Dort, wo aufgrund entsprechend geringerer Transportvolumen oder aus anderen Gründen beispielsweise der Gewichtsminimierung auf Bügel verzichtet werden kann, ist ein Kettenband einsetzbar, bei dem zwischen die Bügel mit den horizontalen Kettengliedern und die vertikalen Kettenglieder jeweils ein horizontales Leerkettenglied und ein weiteres vertikales Kettenglied eingefügt ist. Damit wird die Zahl der Bügel halbiert, wobei aber dennoch im Bereich des Kettenrades eine ausreichende Kraftübertragung deshalb möglich ist, weil sich aufgrund der Teilung immer noch genügend "Zähne" im Eingriff befinden. Dies ist insbesondere dann der Fall, wenn das Leerkettenglied die gleichen Abmessungen wie die horizontalen Kettenglieder aufweist, so daß beide Kettenbänder auf ein und denselben Kettenrädern eingesetzt werden können, ohne daß ein Umbau, eine Anpassung oder ähnliches erforderlich wird. Ebenfalls ist bei dieser Ausführung ein Wenden des gesamten Kettenbandes möglich, so daß eine Mehrfachbenutzung möglich ist, ebenso wie das Verfahren des Kettenbandes in beide Richtungen, ohne daß es an den Verbindungsstellen der Förderrinnen oder an anderen Stellen insbesondere dem Kettenrad zu Problemen, insbesondere zum Verhaken kommen kann.

Ein gleichmäßig flächiges Anliegen der Kettenglieder ineinander bzw. aneinander wird dadurch begünstigt, daß die vertikalen Kettenglieder ein Zwischenstück aufweisen, das abgerundete Innenkanten hat. Dadurch ist eine günstige Führung der Kettenglieder ineinander sichergestellt.

Ein schnelles Verbinden der Bügelteile benachbarter Kettenstränge miteinander wird dadurch erreicht, daß die Bügelteile die Schwerspannhülse aufnehmende Stufenbohrungen aufweisen, die zugleich auch Verbindungszapfen von Verlängerungsstücken aufnehmend ausgebildet sind. So ist es nur nötig, die Schwerspannhülse in eine der Stufenbohrungen eines Bügelteils einzuführen, dann das andere Bügelteil darüberzuschieben und schließlich die Teile durch die Schwerspannhülse bleibend miteinander zu verbinden. Die Schwerspannhülse weist ein gewisses Spiel zwischen den benachbarten Bügeln ermöglichenden Durchmesser auf.

Auch bei dieser Ausführung werden die Führungen zweckmäßigerweise getrennt mit den Bügelteilen verbunden. Sie stellen also keine Baueinheit dar. Vielmehr ist vorgesehen, daß die Schraubstangen über die Bügelteile hinausreichend und die Führungskappen mitfixierend ausgebildet sind. Mit dem Einschieben und Festlegen der Schraubstange sind somit gleichzeitig auch die Führungskappen festgelegt. Dadurch ist die Möglichkeit gegeben, auf Führungskappen in gewissen Bereichen zu verzichten und hier Bügel ohne Führungskappen einzusetzen.

Eine Verdrehsicherung für die Führungskappen und eine leichte Handhabung gleichzeitig sind erreicht, indem erfindungsgemäß die Bügelteile auf der der Führungskappe zugewandten Seite ebenfalls eine Stufenbohrung und zusätzlich eine Ausnehmung aufweisen, wobei Stufenbohrung und beiden Laufflächen zugeordnete Ausnehmung mit der Führungskappe zugeordneten Ansätzen korrespondierend geformt sind. Die Stufenbohrung erlaubt das Einschieben der Ansätze der Führungskappen, wobei gleichzeitig die Ansätze in die entsprechenden Ausnehmungen einrasten, so daß eine wirksame Verdrehsicherung geschaffen ist. Da nunmehr auf beiden Seiten Stufenbohrungen vorgesehen sind, können die erfindungsgemäßen Bügel beliebig verwendet werden und es ergibt sich insgesamt ein vorteilhaftes Baukastensystem, das eine vielseitige Verwendungsmöglichkeit und damit ein Abdecken eines großen Problemkreises zuläßt.

Auch für die Zahnräder bzw. die Kettenräder ergibt sich eine wesentliche Verbesserung, indem die den Kettengliedern angepaßte Zahnlücken und Zähne aufweisende Kettenräder zweigeteilt ausgebildet sind, wobei die Trennlinie durch die Zähne verläuft. Die zweiteilige Ausbildung hat deshalb Vorteile, weil die Kettenräder auf die Antriebswelle aufgesetzt werden müssen, wobei der Verlauf der Trennlinie durch die Zähne hindurch den Vorteil hat, daß eine einfachere Verbindung möglich ist, was hier gemäß der Erfindung erreichbar ist, weil genügend Fleisch durch die besondere Formgebung zur Verfügung steht.

Eine Verschmutzung des Kettenrades wird wirksam dadurch unterbunden, daß die Zahnlücken den Bügeln entsprechend elliptisch ausgebildet sind, wobei ihr Ellipsenbogen nach innen ausgeformt ist. Die Bügel rutschen somit in Zahnlücken hinein, in denen sich Fördergut nicht festsetzen kann, weil der Ellipsenbogen tiefer geht, als die Bügel in die Zahnlücken einfassen können. Weiter dient dieser Zielgebung die Ausbildung, nach der zwischen den Flanken der Zähne und der Zahnlücken eine tiefer als der Ellipsenbogen ausgeformte Rille in Umfangsrichtung des Kettenrades verläuft. Damit kann ggf. Fördergut in diese Rille hineingedrückt werden, ohne Einfluß auf das Eingreifen der Bügel in die Zahnlücken nehmen zu können. Der sich in der Rille evtl. festsetzende Förderdreck wird dabei sicher dadurch ausgetragen, daß dem Kettenrad ein bis ins Rillentiefste der Rille hineinreichende Abstreifer mit Ausgleichsplatte zugeordnet ist.

Die Erfindung zeichnet sich insbesondere dadurch aus, daß ein als Doppelkettenband einsetzbares Kettenband und angepaßte Kettenräder geschaffen sind, die sich im Aufbau besonders gut für den untertägigen Einsatz eignen. Aufgrund der Ausbildung als eine Art Zahnkette ermöglicht die erfindungsgemäße Ausbildung eine optimale Kraftübertragung zwischen Kettenband und Kettenrad. Aufgrund der Vielzahl der die Zahnkette mit bildenden Bügel ergibt sich eine wesentlich verbesserte Transportwirkung, die noch dadurch begünstigt wird, daß aufgrund der Formgebung der Bügel ein gleichmäßiges Schleifen auf der Lauffläche der Förderrinne gegeben ist, so daß eine gleichmäßige Transportbewegung erreicht wird und Anbackungen verhindert werden. Damit ergeben sich optimale Transporteigenschaften. Weiter ist als wesentlicher Vorteil hervorzuheben, daß bei sowieso schon erhöhter Lebensdauer eines derartigen Kettenbandes eine weitere Verlängerung dadurch möglich ist, daß derartige Kettenbänder gewendet werden können, um dann praktisch die gleiche Laufzeit noch einmal im Betrieb zu verbleiben. Insgesamt gesehen ergibt sich somit ein wesentlich verbessertes Kettenband und verbesserte Kettenräder, die zusammen gesehen, einen optimalen Kettenförderer darstellen, der vor- und rückverfahrbar ist, der variabel eingesetzt werden kann, der in Kurven bzw. Rollkurven einsetzbar ist, der höhere Standzeiten und eine verbesserte Transportwirkung gewährleistet. Vorteilhaft ist weiter, daß ein derartiger Kettenförderer mit Kopfantrieb eingesetzt werden kann, weil das Kettenband symmetrisch ausgebildet ist. Es sind Kettenspanner einsetzbar und Zwischenantriebe, so daß größere Fördererlängen insgesamt erreicht werden können. Der Kopfantrieb ist für die Übergabe des Förderergutes im Bereich der Strecke günstig, wobei die Länge des vorkragenden Kopfantriebes variabel ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Förderrinne mit Wendezahngliederband in Draufsicht,
- Fig. 2: ein derartiges Kettenband in Seitenansicht mit geschnitten dargestellten Bügeln,
- Fig. 3: einen Schnitt durch eine Förderrinne mit eingesetztem Kettenband,
- Fig. 4: ein durch Zwischenfügen von Kettengliedern gewichtsmäßig verändertes Kettenband,
- Fig. 5: ein Kettenrad im Schnitt,
- Fig. 6: eine Förderrinne mit Wendezahngliederband,
- Fig. 7: die aus Fig. 6 ersichtliche Ausführung in Draufsicht,
- Fig. 8: einen Mitnehmer mit Führungskappen im Schnitt,
- Fig. 9: einen Mitnehmer ohne Führungskappen im Schnitt,
- Fig. 10: ein über die Zähne zweigeteiltes Kettenrad im Schnitt durch eines der Kettenradteile
- Fig. 11: ein vertikales Kettenglied mit flächig angreifendem horizontalen Kettenglied,
- Fig. 12: eine Vergrößerung des Abrollbereiches beider Kettenglieder,
- Fig. 13: ein Einkettenband,
- Fig. 14: ein Zweikettenband und
- Fig. 15: ein für Bunkeraufgabe oder Abzugsförderer verwendbares Kettenband.

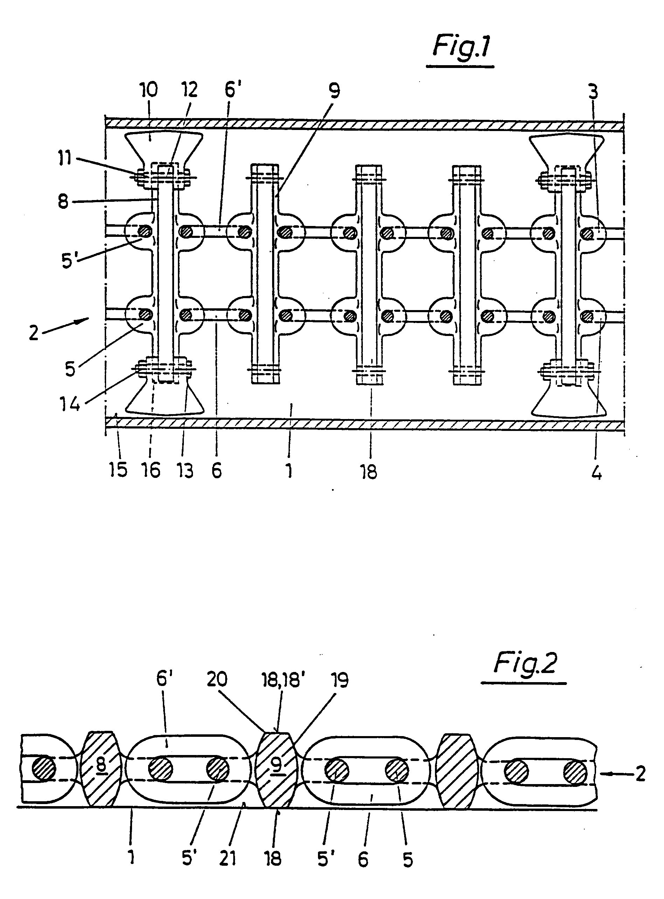

Bei der in Fig. 1 dargestellten Förderrinne (1) sind die seitlichen Führungen weggeschnitten, um das gesamte Kettenband (2) vollständig darstellen zu können. Das aus Fig. 1 ersichtliche Kettenband (2) besteht aus zwei parallel zueinander verlaufenden Kettensträngen (3, 4), die jeweils aus horizontalen Kettengliedern (5, 5') und vertikalen Kettengliedern (6, 6') zusammengesetzt sind.

Die horizontalen Kettenglieder (5, 5') sind wie Fig. 1 verdeutlicht jeweils über Bügel (8, 9) eine Baueinheit ergebend verbunden. Diese Bügel (8, 9) sind jeweils durch ein bzw. zwei parallel zueinander verlaufende vertikale Kettenglieder (6, 6') verbunden, so daß ein derartiges Kettenband (2) durchaus als Zahnkettenband bezeichnet werden kann. Die einzelnen Zähne haben eine Evolventenform.

Einzelne der Bügel (8, 9) weisen endseitig eine Führungskappe (10) auf, die in der Führung (15) der Förderrinne (1) so schleift, daß das gesamte Kettenband (2) sicher geführt ist, auch wenn nicht alle Bügel (8, 9) mit einer derartigen Führungskappe versehen sind, wie dies auch in Fig. 1 wiedergegeben ist. Um die Führungskappen (10) jeweils auswechseln zu können oder gezielt noch mehreren der dargestellten Bügel (9) zuzuordnen, sind alle Bügel (8, 9) mit Bohrungen (12) versehen, die mit den Verbindungsbohrungen (11) der Führungskappen (10) korrespondierend ausgebildet sind. In diese Bohrungen (11, 12) werden horizontal verlaufende Verbindungsschrauben (13) eingeführt, um die Führungskappe (10) mit dem Bügel (8) zu verbinden. Durch einfaches Anziehen der Mutter (14) kann ein ausreichender Kontakt von Führungskappe (10) und Bügel (8, 9) erreicht werden, wobei diese Verbindung auch entsprechend wieder gelöst werden kann. Die Montage wird dadurch begünstigt, daß die einzelnen Führungskappen (10) eine der Form der Bügel (8, 9) angepaßte Ausnehmung (16) aufweisen. Ist die Führungskappe (10) über das Ende des Bügels (8, 9) aufgeschoben, braucht nur noch die schon erwähnte Verbindungsschraube (13) eingeführt zu werden.

Das aus Fig. 1 ersichtliche Kettenband (2) ist in Fig. 2 in Seitenansicht wiedergegeben, wobei die einzelnen Bügel (8, 9) geschnitten wiedergegeben sind, so daß deren Grundform auch sehr gut sichtbar wird. Die praktisch im Querschnitt eine Ellipse wiedergebenden Bügel (8, 9) sind im Bereich der Scheitel (20) abgeschnitten, so daß sich eine Gleitfläche (18) ergibt, die wie aus Fig. 2 ersichtlich ist, auf der Lauffläche (21) der Förderrinne (1) aufliegen. Durch diese gleichmäßige Gleitfläche (18) und auch die entsprechende Rundung der Zahnflanken (19) ist ein günstiger Fördereffekt zu erreichen, insbesondere aber ein Ruhiglauf derartiger Kettenbänder (2) gerade auch im untertägigen Bergbau. Aus Fig. 2 wird deutlich, daß die einzelnen Bügel (8, 9) die vertikalen Kettenglieder (6) jeweils geringfügig überragen, so daß diese erst überhaupt nicht auf der Lauffläche (21) aufliegen und daher vom Verschleiß praktisch freigehalten werden.

Aufgrund der symmetrischen Ausbildung der einzelnen Bügel (8, 9) können die gesamten Kettenbänder (2) nicht nur sowohl in beide Richtungen gezogen werden, sondern auch gewendet werden, so daß bei entsprechend aufgetretenem Verschleiß durch entsprechendes Wenden die Laufzeit bzw. Lebensdauer derartiger Kettenbänder (2) gezielt erhöht werden kann.

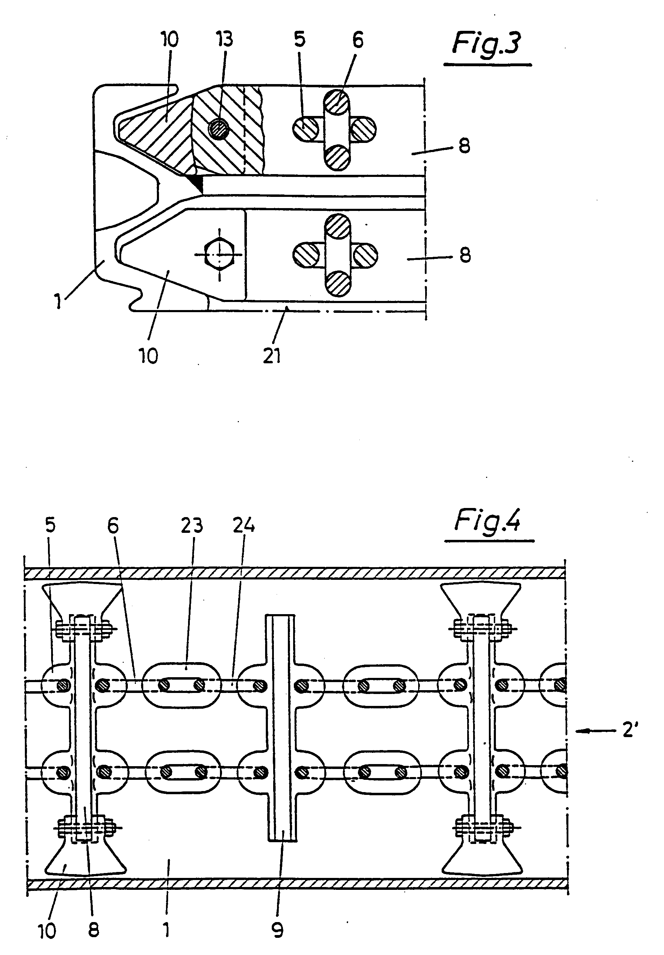

Beim Querschnitt einer Förderrinne (1) gemäß Fig. 3 wird noch einmal deutlich, daß die Verbindungsschrauben (13) zwischen Führungskappe (10) und Bügel (8, 9) praktisch vom Verschleiß völlig freigehalten sind. Aufgrund der Formgebung der Führungskappen (10) ist im übrigen eine günstige und sichere Führung in der Förderrinne möglich, auch wenn beispielsweise Mulden und Sättel durchfahren werden müssen.

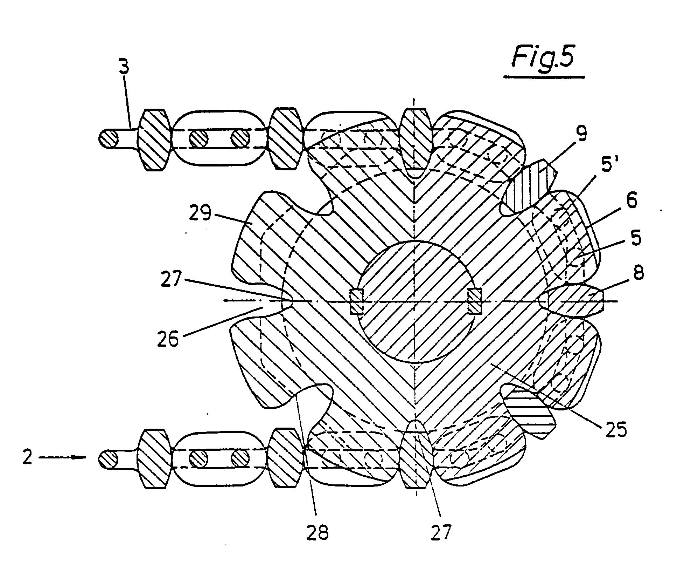

Dort, wo aufgrund der vorgefundenen Gegebenheiten mit einem leichteren Kettenband (2') gearbeitet werden kann, ist die aus Fig. 4 ersichtliche Ausführungsform einzusetzen. Zwischen die einzelnen Bügel (8 und 9) sind jeweils ein Leerkettenglied (23) und ein weiteres vertikales Kettenglied (24) eingesetzt. Da die horizontalen Leerkettenglieder (23) die gleichen Abmessungen wie die horizontalen Kettenglieder (5), die in die Bügel (8 und 9) integriert sind, aufweisen, ist ein einwandfreier Lauf eines derartigen Kettenbandes (2) über das Kettenrad gewährleistet. Auch hier sind die vorteilhaften Laufeigenschaften gegeben, wobei eine etwas verminderte Kraftübertragung im Bereich des Kettenrades sich dadurch ergibt, daß nicht jedes horizontale Kettenglied mit einem Bügel (8,9) und damit vollflächig mit dem Kettenrad (25) zusammenwirkt.

Ein solches Kettenrad (25) zeigt Fig. 5 und zwar im Schnitt, um die genaue Anordnung zu verdeutlichen. Das Kettenrad (25) weist zwischen den Zähnen (29) Zahnlücken (26) auf, in die die einzelnen Bügel (8, 9) mit ihrer Zahnform eingreifen. Durch Ausbildung eines über die einzelnen Bügel (8, 9) hinausreichenden Lückentiefsten (27) ist sichergestellt, daß durch Anbackungen der Eingriff der einzelnen Bügel (8, 9) in das Kettenrad (25) nicht beeinträchtigt wird. So ist sichergestellt, daß die Lückenflanken (28) jeweils mit den Zahnflanken (19) korrespondierend dicht aneinandergedrückt werden, so daß sich eine vorteilhafte Krafteinleitung vom Kettenrad (25) in das Kettenband (2) ergibt. Das aus Fig. 5 sich ergebende Kettenband (2) bzw. der entsprechende Kettenstrang (3) entspricht der Ausführung nach Fig. 1, wo er in Draufsicht wiedergegeben ist.

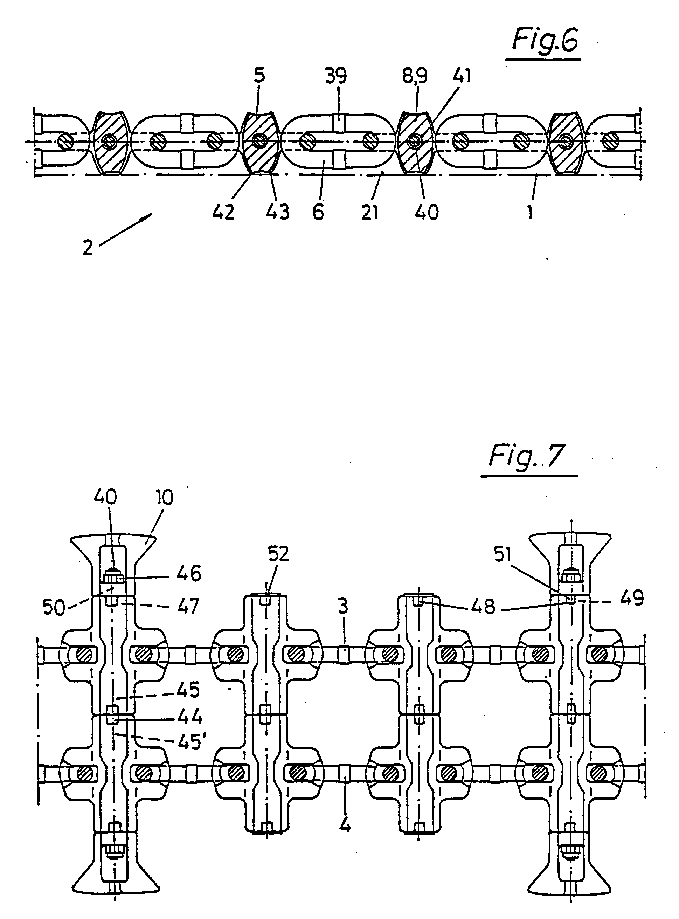

Die in Fig. 6 wiedergegebene Ausführung eines Kettenbandes (2) weicht von der nach Fig. 2 dadurch ab, daß die vertikalen Kettenglieder (6) eine Stauchung (39) aufweisen, wodurch die vereinfachte Herstellung derartiger Kettenglieder angedeutet werden soll und auch deren Verbindung bzw. Einführen in die jeweils benachbarten horizontalen Kettenglieder (5).

Außerdem weisen die Bügel (8 bzw. 9) mittig eine Innenbohrung (41) mit einer durchgeführten Schraubstange (40) auf. Dadurch ist es möglich, derartige jedem einzelnen Kettenstrang (3 bzw. 4) zugeordnete Bügelteile (8 bzw. 8') durch die Schraubstange (40) miteinander zu verbinden. Weitere Einzelheiten werden noch weiter hinten erklärt.

Schließlich weisen die einzelnen Bügel (8, 9) eine konkave Wölbung auf, so daß sich Reinigungskanten (42, 43) ergeben, die ein "Sauberfegen" der Lauffläche (21) der Förderrinne (1) sicherstellen.

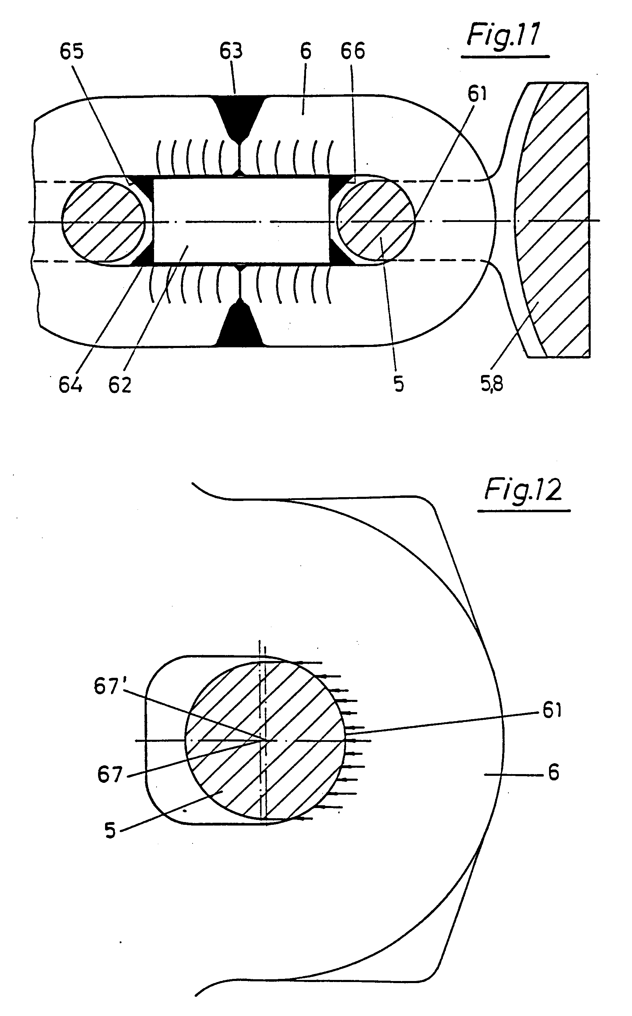

Fig. 7 zeigt eine Draufsicht auf ein derartiges Kettenband (2) aus den beiden Kettensträngen (3 und 4). Die Verbindung dieser Kettenstränge (3, 4) erfolgt durch die bereits erwähnte Schraubstange (40), die durch die Innenbohrung (41) durchgeschoben und endseitig über die Haltemutter (46) festgelegt ist. Darüber hinaus sind jeweils Stufenbohrungen (45) in den Bügelteilen (8, 8') vorgesehen, in die eine Schwerspannhülse (44) eingeführt ist, wie dies Fig. 11 erläutert. Diese Schwerspannhülse (44) ermöglicht es, daß die beiden parallel zueinander auf das Kettenrad geführten Kettenstränge (3, 4) auch bei auftretenden Ungleichmäßigkeiten dennoch eine gleichmäßige Übertragung der Kräfte erzwingen, weil ein gewisser Ausgleich durch die Schwerspannhülse (44) möglich ist.

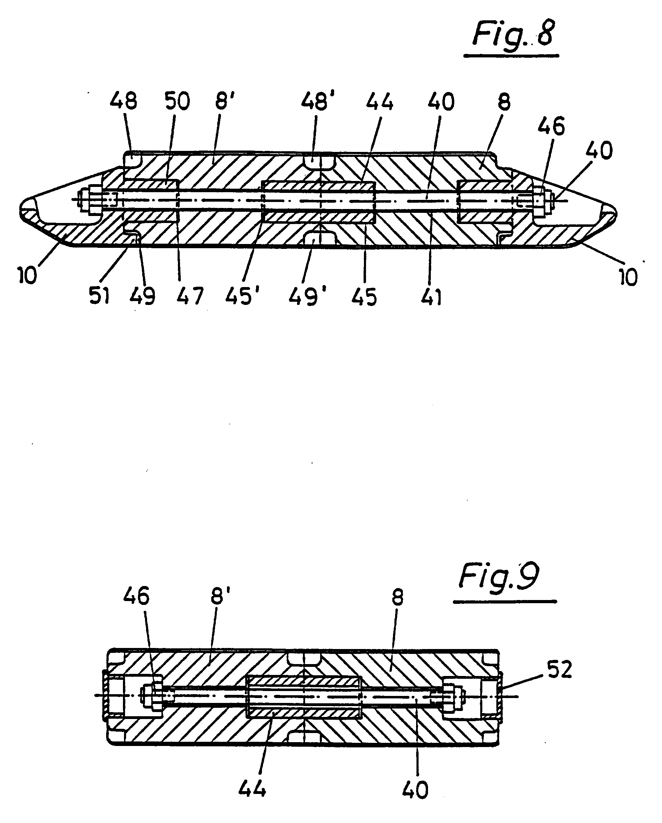

Fig. 8 zeigt weiter, daß mit ein und derselben Schraubstange (40) auch gleichzeitig die Führungskappen (10) festgelegt sind. Diese Führungskappen (10) verfügen über einen Ansatz (50), der in die Stufenbohrung (47) der Bügelteile (8, 8') hineinpaßt, so daß eine leichte Montage gewährleistet ist. Eine Verdrehsicherung wird dadurch erreicht, daß die Bügel (8, 9) darüber hinaus Ausnehmungen (48, 49) aufweisen, die mit den Ansätzen (51) der Führungskappen (10) korrespondierend geformt sind, so daß, wie aus Fig. 11 ersichtlich ist, ein einfaches Festlegen möglich ist.

Fig. 9 zeigt zwei miteinander verbundene Bügelteile (8, 8'), auf die gleiche Weise wie gemäß Fig. 8, nur daß hier eine kürzere Schraubstange (40) zum Einsatz kommt. Die Stufenbohrungen (47) sind hier durch Schutzkappen (52) verschlossen, da hier auf Führungskappen verzichtet ist. Die Fig. 11 und 12 zeigen, daß eine vorteilhafte Baukastenform vorgegeben ist, die eine vielseitige Verwendung der Bügel (8, 9) und der zugehörigen Teile vorgibt.

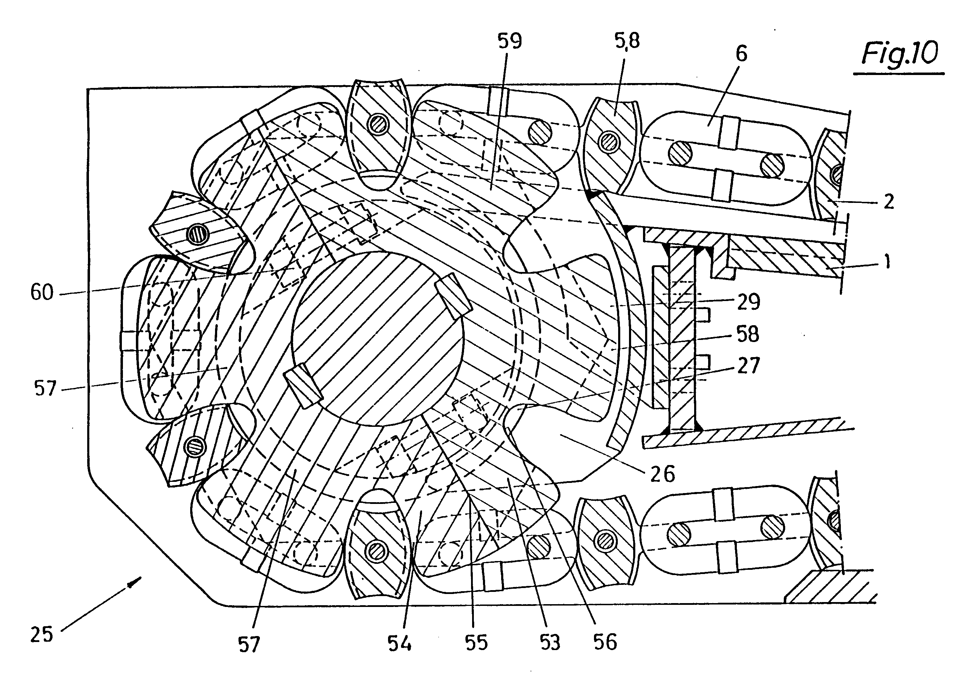

Fig. 10 zeigt ein Kettenrad (25), das zum Umlenken des mit den aus Fig. 6 ersichtlichen Bügeln (8, 9) bestückten Kettenbandes (2) vorgesehen ist. Das Kettenrad (25) ist aus zwei gleichen Kettenradhälften (53, 54) zusammengesetzt, wobei die beiden Kettenradhälften eine Trennlinie (55) aufweisen, die durch die Zähne (29) verläuft.

Auch hier sind die Zahnlücken (26) so ausgebildet, daß die Ellipsenform aufweisenden Bügel (8, 9) sicher eingeführt werden. Der Ellipsenbogen (56) ist so weit geführt, daß er bis in die Rille (57) zwischen den einzelnen Zähnen (29) hineinragt, so daß ein Festsetzen von Fördergut in diesem Bereich ausgeschlossen ist. Die Flanken (58) sind wie erwähnt so weit heruntergezogen, daß auch der Abstreifer (59) in diesen Bereich eingreifen und evtl. noch verbleibende Verschmutzungen wegnehmen kann.

Die beiden Kettenradhälften (53, 54) sind über Halteschrauben (60) miteinander verbunden, eine schnelle Montage ist so gewährleistet. Die Fig. 10 verdeutlicht, wie die horizontalen Kettenglieder (5), d.h. die Bügel (8, 9) und die vertikalen Kettenglieder (6) in das Kettenrad (25) eingreifen. Dieser besondere Eingriff erbringt eine optimale Krafteinleitung.

Die Fig. 11 und 12 zeigen Kettenglieder in vergrößerter Form, um zu verdeutlichen, daß bei den entsprechend der Erfinder geformten Kettengliedern (5,6) eine flächige Anlage im Abrollbereich (61) sichergestellt ist. Die bisher fast unmittelbar nach dem Auflegen eines neuen Kettenbandes auftretenden Abplattungen, die rund die Hälfte der zulässigen Längung verursachen, entfallen. Dadurch können wesentlich höhere Standzeiten erreicht werden. Eine zweckmäßige Formgebung bei den horizontalen Kettengliedern kann beim Schlagen im Gesenk o.ä Herstellungsweise verwirklicht werden. Die horizontalen Kettenglieder und die vertikalen Kettenglieder (5,6 ) bilden eine Zahnkette bei der aus Fig. 14 und 15 entnehmbaren Ausbildung, wobei den vertikalen Kettengliedern Zwischenstücke (62) mit abgerundeten Innenkanten (65, 66) zugeordnet sind. Die vertikalen Kettenglieder (6) bestehen aus zwei gleich ausgebildeten Teilen, die über Schweißnähte (63) bzw. mit den Zwischenstücken (62) über die Schweißnähte (64) verbunden sind. Aufgrund dieser Ausbildung ist die gezielte flächige Verbindung der einzelnen Kettenglieder miteinander zu erreichen. Nach Fig. 15 ist dabei der Mittelpunkt (67, 67') etwas verschoben, wodurch die gleichmäßige Anlage im Abbaubereich (61) zu erreichen ist.

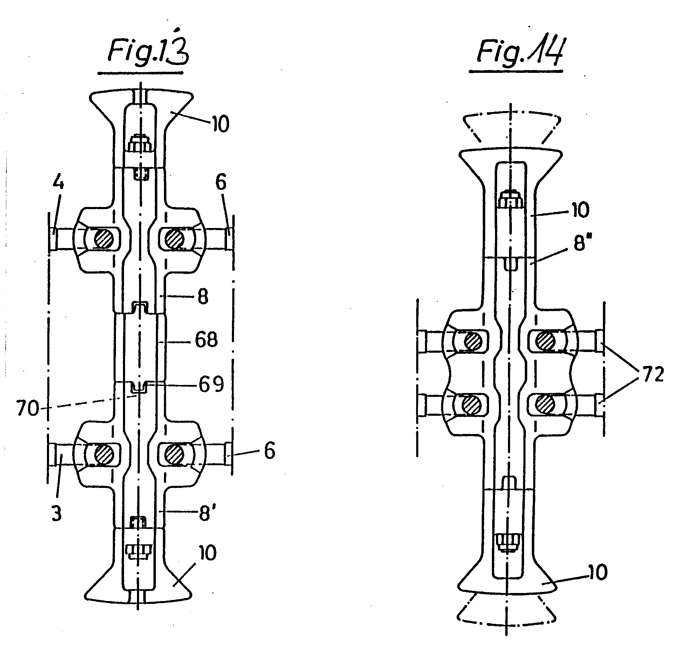

Die Fig. 13 und 14 zeigen unterschiedliche Ausbildungen von Kettenbändern (2).

Nach Fig. 13 ist ein Zweikettenband verwirklicht, wobei der Abstand zwischen den einzelnen Kettensträngen (3, 4) durch Verlängerungsstücke (68) vorgegeben werden kann.

Diese Verlängerungsstücke (68) verfügen dabei über Verbindungszapfen (70) und Ansätze (69), die mit den Stufenbohrungen (45) bzw. den Ausnehmungen (49) korrespondieren. Damit paßt sich ein derartiges Verlängerungsstück in das Baukastenprinzip vorteilhaft ein und die Länge derartiger Mitnehmer kann den jeweiligen Gegebenheiten ohne großen Aufwand angepaßt werden, zumindest, ohne daß ein völlig neues Kettenband eingesetzt werden muß.

Bei der aus Fig. 14 ersichtlichen Ausführungsform handelt es sich um eine Doppelmittenkette (72), wobei ein sehr stabiler Bügel (8'') vorgegeben ist, da ein derart ausgebildetes Kettenband mit Führungskappen (10) für den Einsatz in Bunkeraufgabe bzw. Abzugsförderern vorgesehen ist.

## Patentansprüche

1. Kettenförderer mit Kettenband (2), insbesondere dem Massenguttransport im untertägigen Berg- und Tunnelbau dienendes Doppelmittenkettenband, das jeweils aus ineinandergreifenden, horizontalen und vertikalen Kettengliedern (5,6) zusammengesetzt und mit im Abstand angeordneten, in der Förderrinne (1) geführten Mitnehmern bestückt ist und in der Teilung den endseitig des Förderrinnenstranges angeordneten Kettenrädern (25) angepaßt ist, wobei die Kettenglieder (5,6) eine günstige Krafteinleitung von den Kettenrädern (25) in das Kettenband (2) ermöglichend vergrößerte Auflageflächen aufweisen, wobei die horizontalen Kettenglieder (5) der nebeneinander liegenden Kettenstränge (3, 4) über einen Bügel (8, 9) miteinander verbunden sind, der einen quer zur Längsrichtung der Ketten horizontal verlaufenden Mittensteg aufweist, der über die Ketten hinausreicht und eine den Zahnlächen der Kettenräder angepaßte Wendezahnform aufweist, **dadurch gekennzeichnet** daß dieser im Querschnitt die Form einer in horizontaler und vertikaler Richtung symmetrischen, im Bereich beider Scheitel (20) eine Gleitfläche (18) ergebend abgeschnittenen Ellipse aufweist, und wobei der Bügel (8) oder Teile (8, 8') des Bügels mit dem jeweiligen horizontalen Kettenglied (5) eine einstückige Baueinheit bildet oder bilden und daß die im Bereich der Scheitel (20) vorhandenen Gleitflächen (18) zur Auflage auf der Lauffläche (21) der Förderrinne (1) ausgebildet sind.

2. Kettenförderer nach Anspruch 1, **dadurch gekennzeichnet,** daß die Bügelteile (8, 8') und die horizontalen Kettenglieder (5) beider Kettenstränge (3, 4) eine einstückige Baueinheit bilden.

3. Kettenförderer nach Anspruch 1, **dadurch gekennzeichnet,** daß die Bügelteile (8, 8') der benachbarten Kettenstränge (3, 4) über eine in beide Bügel einsteckbare Schwerspannhülse (44) und eine durchgehend ausgebildete Schraubstange (40) miteinander verbunden sind.

4. Kettenförderer nach Anspruch 1, **dadurch gekennzeichnet,** daß die Gleitfläche (18) konkav ausgebildet ist.

5. Kettenförderer nach Anspruch 1, **dadurch gekennzeichnet,** daß die horizontalen Kettenglieder (5) genau mittig über den Bügel (8, 9) beidseitig vorstehend ausgebildet sind.

6. Kettenförderer nach Anspruch 1, **dadurch gekennzeichnet,** daß die Bügel (8, 9) endseitig in Förderrichtung verlaufende Bohrungen (12) aufweisen, die mit Verbindungsbohrungen (11) von in Führungen (15) der Förderrinnen (1) eingepaßte Führungskappen (10) korrespondierend ausgebildet sind.

7. Kettenförderer nach Anspruch 6**, dadurch gekennzeichnet,** daß die Führungskappen (10) eine Ausnehmung (16) mit der Form der Bügel (8, 8') korrespondierende aufweisen.

8. Kettenförderer nach Anspruch 1 **dadurch gekennzeichnet,** daß die vertikalen und horizontalen Kettenglieder (6, 5) im Abrollbereich (61) kalottenförmig und damit eine flächige Anlage ergebend ausgebildet sind.

9. Kettenförderer nach Anspruch 1, **dadurch gekennzeichnet,** daß die die Gleitfläche (18) erzeugende Schnittlinie (18') bei den elliptischen Bügeln (8, 9) so gelegt ist, daß die Bügel (8,9) die vertikalen Kettenglieder (6) beidseitig quer zur Förderrichtung verlaufend überragen.

10. Kettenförderer nach Anspruch 1, **dadurch gekennzeichnet,** daß zwischen die Bügel (8, 9) mit den horizontalen Kettengliedern (5) und die vertikalen Kettenglieder (6) jeweils ein horizontales Kettenglied (23) und ein weiteres vertikales Kettenglied (24) eingefügt ist.

11. Kettenförderer nach Anspruch 10, **dadurch gekennzeichnet,** daß das horizontale Kettenglied (23) die gleichen Abmessungen wie die horizontalen Kettenglieder (5) aufweist.

12. Kettenförderer nach Anspruch 8, **dadurch gekennzeichnet,** daß die vertikalen Kettenglieder (6) ein Zwischenstück (62) aufweisen, das abgerundete Innenkanten (65, 66) aufweist.

13. Kettenförderer nach Anspruch 3, **dadurch gekennzeichnet,** daß die die Bügelteile (8, 8') die Schwerspannhülse (44) aufnehmende Stufenbohrungen (45) aufweisen, die zugleich auch Verbindungszapfen (70) von Verlängerungsstücken (68) aufnehmend ausgebildet sind.

14. Kettenförderer nach Anspruch 3, **dadurch gekennzeichnet,** daß die Schraubstangen (40) über die die Bügelteile (8, 8') hinausreichend und die Führungskappen (10) mitfixierend ausgebildet sind.

15. Kettenförderer nach Anspruch 3 und Anspruch 14, **dadurch gekennzeichnet,** daß die die Bügelteile (8, 8') auf der der Führungskappe (10) zugewandten Seiten ebenfalls eine Stufenbohrung (47) und zusätzlich eine Ausnehmung (48, 49) aufweisen, wobei Stufenbohrung (47) und beiden Laufflächen (21) zugeordnete Ausnehmung (48, 49) mit der Führungskappe zugeordneten Ansätzen (50, 51) korrespondierend geformt sind.

16. Kettenförderer nach Anspruch 1 und Anspruch 2 oder Anspruch 3, **dadurch gekennzeichnet,** daß den Ketten - gliedern (5, 6) angepaßte Zahnlücken (26) und Zähne (29) aufweisende Kettenräder (25) zwei geteilt ausgebildet sind, wobei die Trennlinie (55) durch die Zähne (29) verläuft.

17. Kettenförderer nach Anspruch 16, **dadurch gekennzeichnet,** daß die Zahnlücken (26) den Bügeln (8, 9) entsprechend elliptisch ausgebildet sind, wobei ihr Ellipsenbogen (56) nach innen ausgeformt ist.

18. Kettenförderer nach Anspruch 17, **dadurch gekennzeichnet,** daß die Zähne (29) mit die vertikalen Kettenglieder (6) aufnehmenden Flanken (58) hinter einer dazwischenliegender Rille (57) ausgerüstet sind, wobei diese Rille (57) auch durch die Zahnlücke (26) verläuft und radial tiefer als der Ellipsenbogen (56) in das Kettenrad (25) eingeschnitten ist.

19. Kettenförderer nach Anspruch 18, **dadurch gekennzeichnet,** daß dem Kettenrad (25) ein bis ins Rillentiefste der Rille (57) hineinreichende Abstreifer (59) mit Ausgleichsplatte zugeordnet ist.

## Claims

1. A chain conveyor with a chain belt (2), in particular a double-centre chain belt for bulk goods transport in underground mining and tunnel construction and which is composed of inter-engaging horizontal and vertical chain links (5, 6) and provided with entraining means disposed at intervals and guided in the conveyor trough (1), the spacing between them being adapted to the chain sprockets (25) disposed at the ends of the conveyor trough line, the chain links (5, 6) having enlarged supporting surfaces allowing a favourable initiation of force from the chain sprockets (25) into the chain belt (2), whereby the horizontal chain links (5) of the adjacently disposed chain lines (3, 4) being connected to one another via a curved member (8, 9) having a central web extending horizontally and crosswise to the longitudinal direction of the chains and which extends beyond the chains and has a spiral tooth form adapted to the gaps between the teeth on the chain sprockets, characterised in that it has, in cross-section, the form of an ellipse symmetrical in a horizontal and vertical direction and cut off in the region of both apices (20) to provide a sliding surface (18) and whereby the curved member (8) or parts (8, 8') of the curved member forms or form a one-piece component unit with the respective horizontal chain link and in that the sliding surfaces (18) provided in the region of the apices (20) are constructed on the working surface (21) of the conveyor trough (1).

2. A chain conveyor according to Claim 1, characterised in that the curved member parts (8, 8') and the horizontal chain links (5) of the two chain lines (3, 4) form a one-piece component unit.

3. A chain conveyor according to Claim 1, characterised in that the curved member parts (8, 8') of the adjacent chain lines (3, 4) are connected to one another by a heavy clamping sleeve (44) adapted for insertion into the two curved members and by a straight-through screw-threaded rod (40).

4. A chain conveyor according to Claim 1, characterised in that the sliding surface (18) is concave.

5. A chain conveyor according to Claim 1, characterised in that the horizontal chain links (5) are constructed to project exactly centrally beyond and on both sides of the curved members (8, 9).

6. A chain conveyor according to Claim 1, characterised in that the curved members (8, 9) have at their ends and extending in the direction of conveyance bores (12) which are constructed to correspond to the connecting bores (11) of guide caps (10) which are fitted into guides (15) in the conveyor troughs (1).

7. A chain conveyor according to Claim 6, characterised in that the guide caps (10) comprise a recess (16) which matches the shape of the curved member parts (8, 8').

8. A chain conveyor according to Claim 1, characterised in that the vertical and horizontal chain links (6, 5) are cup-shaped in the rolling area (61) and so provide a planar bearing surface.

9. A chain conveyor according to Claim 1, characterised in that where the elliptical curved members (8, 9) are concerned, the intersection line (18') which creates the sliding surface (18) is so situated that the curved members (8, 9) project on both sides beyond the vertical chain links (6) and extend crosswise to the direction of conveyance.

10. A chain conveyor according to Claim 1, characterised in that a horizontal chain link (23) and a further vertical chain link (24) are inserted between the curved members (8, 9) with the horizontal chain links (5) and the vertical chain links (6).

11. A chain conveyor according to Claim 10, characterised in that the horizontal chain link (23) has the same dimensions as the horizontal chain links (5).

12. A chain conveyor according to Claim 8, characterised in that the vertical chain links (6) have an intermediate piece (62) which has rounded inner edges (65, 66).

13. A chain conveyor according to Claim 3, characterised in that the curved member parts (8, 8') have, accommodating the heavy clamping sleeve (44), stepped bores (45) which are at the same time constructed so that they also accommodate connecting studs (70) on extension pieces (68).

14. A chain conveyor according to Claim 3, characterised in that the screw-threaded rods (40) are constructed to extend beyond the curved member parts (8, 8') and so that they jointly fix the guide caps (10).

15. A chain conveyor according to Claim 3 and Claim 14, characterised in that the curved member parts (8, 8') on the sides facing the guide cap (10) likewise comprise a stepped bore (47) and in addition a recess (48, 49), whereby stepped bore (47) and recess (48, 49) associated with both working surfaces (21) are shaped so that they correspond to extension members (50, 51) associated with the guide cap.

16. A chain conveyor according to Claim 1 and Claim 2 or Claim 3, characterised in that chain sprockets (25) comprising tooth gaps (26) and teeth (29) adapted to the chain links (5, 6) are of two-part construction, the line of separation (55) extending through the teeth (29).

17. A chain conveyor according to Claim 16, characterised in that the teeth gaps (26) are elliptical in construction, corresponding to the curved members (8, 9), the arc (56) of their ellipse being shaped inwardly.

18. A chain conveyor according to Claim 17, characterised in that the teeth (29) are provided with flanks (58) which accommodate the vertical chain links (6), behind a groove (57) between them, this groove (57) also extending through the tooth gap (26) and being cut radially more deeply into the chain sprocket (25) than the arc (56) of the ellipse.

19. A chain conveyor according to Claim 18, characterised in that a scraper (59) with a compensating plate is associated with the chain sprocket (25) and extends into the deepest part of the groove (57).

## Revendications

1. Transporteur à chaîne, comprenant un ruban à chaîne (2), notamment un ruban à double chaîne centrale servant au transport de produits en vrac dans l'exploitation des mines au fond et la construction des tunnels, qui, pour chaque chaîne, est composée de maillons de chaîne horizontaux (5) et de maillons de chaîne verticaux (6) s'accrochant les uns dans les autres et est pourvue d'organes d'entraînement disposés à distance et guidés dans la gouttière de transport (1) et dont le pas est adapté à celui des roues à chaîne (25) disposées aux extrémités du tronçon de gouttière de transport, les maillons de chaîne (5, 6) comportant des surfaces d'appui élargies permettant une transmission de force favorable des roues à chaîne (25) au ruban à chaîne (2), tandis que les maillons de chaîne horizontaux (5) des brins de chaîne (3, 4) disposés l'un à côté de l'autre sont réunis entre eux au moyen d'un étrier (8, 9) qui comporte une barre centrale qui est orientée horizontalement, transversalement à la direction longitudinale des chaînes, qui s'étend au-delà de ces chaînes et qui possède une forme de dent à profil adapté aux entre-dents des roues a chaîne, caractérisé en ce qu'en section transversale, cette barre centrale a la forme d'une ellipse qui est symétrique en direction horizontale et en direction verticale et est tronquée dans la zone de ses deux sommets (20) en formant une surface de glissement (18), tandis que l'étrier (8) ou es parties (8, 8') de l'étrier constitue ou constituent une unité structurelle unitaire d'une seule pièce avec le maillon de chaîne horizontal associé, et en ce que les surfaces de glissement (18) réalisées dans la zone des sommets (20) sont agencées de façon à venir en appui sur la surface de glissement (2) de la gouttière de transport (1).

2. Transporteur à chaîne selon la revendication 1, caractérisé en ce que les parties d'étrier (8, 8') et les maillons de chaîne horizontaux (5) des deux brins de chaîne (3, 4) constituent un ensemble structurel unitaire d'une seule pièce.

3. Transporteur à chaîne selon la revendication 1, caractérisé en ce que les parties d'étrier (8, 8') sont réunies entre elles au moyen d'une douille élastique à pouvoir amortisseur élevé (44), agencée de façon à pouvoir s'emboîter dans les deux étriers des brins de chaîne (3, 4) voisins, et d'une tige filetée (40) s'étendant d'une extrémité à l'autre.

4. Transporteur à chaîne selon la revendication 1, caractérisé en ce que la surface de glissement (18) a une forme concave.

5. Transporteur à chaîne selon la revendication 1, caractérisé en ce que les maillons de chaîne horizontaux (5) font saillie des deux côtés de l'étrier (8, 9) précisément au milieu de ce dernier.

6. Transporteur à chaîne selon la revendication 1, caractérisé en ce que les étriers (8, 9) comportent à leurs extrémités des perçages (12) qui sont orientés suivant la direction de transport et qui sont réalisés d'une manière correspondant à des perçages de liaison (11) de capuchons de guidage (10) s'emboîtant dans des glissières (15) de la gouttière de transport (1).

7. Transporteur à chaîne selon la revendication 6, caractérisé en ce que les capuchons de guidage (10) comportent un évidement (16) correspondant à la forme de l'étrier (8, 8').

8. Transporteur à chaîne selon la revendication 1, caractérisé en ce que les maillons de chaîne verticaux (6) et les maillons de chaîne horizontaux (5) ont une forme de calotte dans la zone de déroulement (61), de façon à fournir ainsi un appu plan.

9. Transporteur à chaîne selon la revendication 1, caractérisé en ce que le plan de taille (18') qui produit la surface de glissement (18) est ménagé, dans les étriers elliptiques (8, 9), d'une façon telle que les étriers (8, 9) font saillie des deux côtés des maillons de chaîne verticaux (6) en s'étendant transversalement à la direction de transport.

10. Transporteur à chaîne selon la revendication 1, caractérisé en ce qu'entre les étriers (8, 9), comportant les maillons de chaîne horizontaux (5), et les maillons de chaîne verticaux (6), il est chaque fois inséré un maillon de chaîne horizontal (23) et un autre maillon de chaîne vertical (24).

11. Transporteur à chaîne selon la revendication 10, caractérisé en ce que le maillon de chaîne horizontal (23) a les mêmes dimensions que les maillons de chaîne horizontaux (5).

12. Transporteur à chaîne selon la revendication 8, caractérisé en ce que les maillons de chaîne verticaux (6) comportent une pièce intermédiaire (62) qui présente des bords intérieurs arrondis (65, 66).

13. Transporteur à chaîne selon la revendication 3, caractérisé en ce que les parties d'étrier (8, 8') comportent des alésages étagés (45) qui servent à loger la douille élastique à pouvoir amortisseur élevé (44) et qui sont en même temps réalisés de façon à servir à loger aussi des tétons de liaison (70) de pièces de prolongement (68).

14. Transporteur à chaîne selon la revendication 3, caractérisé en ce que les tiges filetées (40) sont réalisées de façon à s'étendre au-delà des parties d'étrier (8, 8') et de façon à fixer entre eux les capuchons de guidage (10).

15. Transporteur à chaîne selon la revendication 3 et la revendication 14, caractérisé en ce que, sur leurs côtés tournés vers le capuchon de guidage (10), les parties d'étrier (8, 8') comportent aussi un alésage étagé (47) et en outre un évidement (48, 49), tandis qu'un alésage étagé (47) et un évidement (48, 49) associés aux deux surfaces de glissement (21) sont formés d'une manière correspondant à des parties en salle (50, 51) associées au capuchon de guidage.

16. Transporteur à chaîne selon la revendication 1 et l'une des revendications 2 et 3, caractérisé en ce que des roues à chaîne (25), comportant des dents (29) et des entre-dents (26) adaptés aux maillons de chaîne (5, 6), sont réalisées en deux parties, le plan de joint (55) passant par les dents (29).

17. Transporteur à chaîne selon la revendication 16, caractérisé en ce que les entre-dents (26) ont une forme elliptique correspondant à celle des étriers (8, 9), leurs arcs d'ellipse (56) étant réalisés suivant un profil concave.

18. Transporteur à chaîne selon la revendication 17, caractérisé en ce que les dents (29) sont pourvues de flancs (58), servant à loger les maillons de chaîne verticaux (6), en arrière d'une gorge (57) située entre ces flancs, cette gorge (57) s'étendant aussi dans les entre-dents (26) et étant taillée dans la roue à chaîne (25) à une profondeur radiale plus grande que l'arc d'ellipse (56).

19. Transporteur à chaîne selon la revendication 18, caractérisé en ce qu'à la roue à chaîne (25) est associé un racleur (59) s'étendant jusqu'au plus profond de la gorge (57) et comportant une plaquette de compensation.
